Europäisches Patentamt

European Patent Office

Office européen des brevets

(11) Publication number: **0 077 349**
**B1**

## (12) EUROPEAN PATENT SPECIFICATION

(45) Date of publication of patent specification: **06.02.85**

(21) Application number: **82901140.2**

(22) Date of filing: **27.04.82**

(86) International application number:
**PCT/GB82/00124**

(87) International publication number:
**WO 82/03813 11.11.82 Gazette 82/27**

(51) Int. Cl.⁴: **B 23 P 15/10, C 22 F 3/00,
C 22 F 1/04**

(54) **MANUFACTURE OF PISTONS.**

(30) Priority: **28.04.81 GB 8113045**

(43) Date of publication of application:
**27.04.83 Bulletin 83/17**

(45) Publication of the grant of the patent:
**06.02.85 Bulletin 85/06**

(84) Designated Contracting States:
**FR**

(56) References cited:
**EP-A-0 030 042
DE-A-2 612 833
GB-A-1 373 987
US-A-4 138 984**

(73) Proprietor: **AE PLC
Cawston House Cawston
Rugby Warwickshire CV22 7SB (GB)**

(72) Inventor: **GROGAN, Anthony Frederick
10 Staverton Leys
Rugby, Warwickshire (GB)**

(74) Representative: **Knott, Stephen Gilbert et al
MATHISEN, MACARA & CO. European Patent
Attorneys Lyon House Lyon Road
Harrow, Middlesex HA1 2ET (GB)**

Courier Press, Leamington Spa, England.

## Description

The invention relates to methods of manufacture of pistons of aluminium and aluminium alloy for internal combustion engines or for compressors and to pistons made by such methods.

Such pistons are generally manufactured from a piston blank with various features being machined in the piston blank during production of a finished piston from the piston blank. Such features may include, particularly in a piston for a diesel engine, a recessed crown or bowl which has an edge region between the recess or bowl and a radially outer peripheral portion of the crown. This edge is relatively thin and is subject, in use, to the high temperatures generated by combustion. Because of this, the aluminium or aluminium alloy of which the edge is formed may be subject to fatigue and cracking.

In British Patent Specification No. 1 373 987, there is described a method of treating this edge by re-melting the edge using a charge carrier beam. However, it has been found that this treatment does not give a satisfactory solution to the problem.

According to a first aspect of the invention, there is provided a method of manufacturing a piston of an aluminium or an aluminium alloy material for a combustion engine or a reciprocating compressor and having a recessed crown or bowl in the crown and an edge region between the recess or bowl and a radially outer peripheral portion of the crown, characterised by the step of, either before or after the machining of the recess, laser or electron beam alloying or dispersion hardening the edge region or the part of the piston which is to form the edge region.

According to a second aspect of the invention, there is provided a piston when made by the method according to the first aspect of the invention.

The following is a more detailed description of some embodiments of the invention, by way of example, reference being made to the accompanying drawings, in which:—

Figure 1 is a cross-section in an axial plane of part of a first piston showing a first method of manufacture of a piston;

Figure 2 is a cross-section in an axial plane of part of a second piston showing a second method of manufacture of a piston;

Figure 3 is a cross-section in an axial plane of a part of a third piston showing a third method of manufacture of a piston;

Figure 4 is a cross-section in an axial plane of a part of a fourth piston showing a fourth method of manufacture of a piston;

Figures 5A, 5B, 5C and 5D show respective laser beam configurations for use in the first to fourth methods.

All the methods to be described hereinafter with reference to the drawings are applied to a piston of aluminium or aluminium alloy for an internal combustion engine and having, when finished, a recessed crown to form, for example, a combustion bowl in a diesel-cycle internal combustion engine.

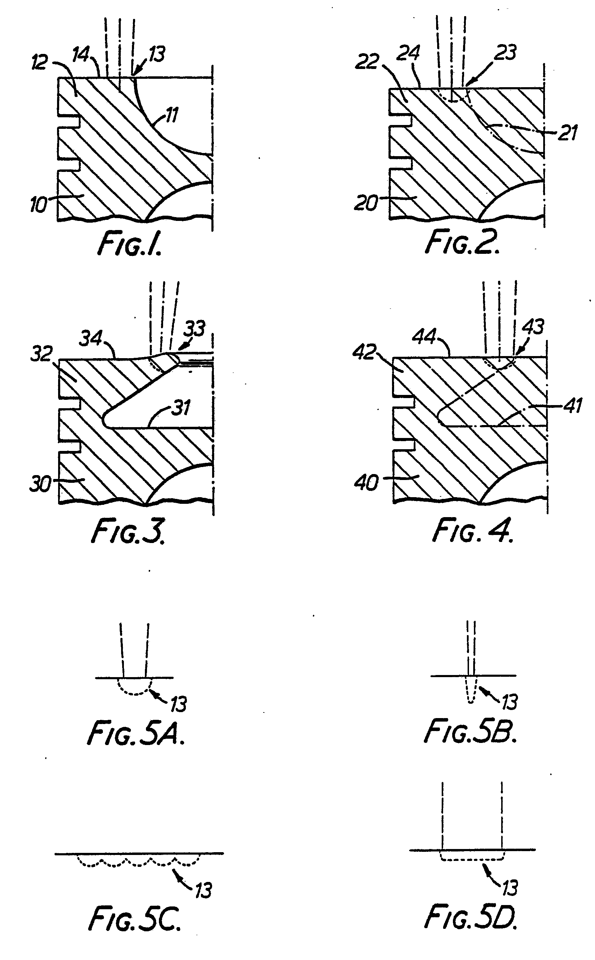

Referring first to Figure 1, in the first method, a piston 10 of this kind is machined so that it has a hemispherical recess 11 in the crown 12. It will, of course, be appreciated that the shape of the recess need not be hemispherical but could be of any required shape. The axial length of the piston 10 is greater than the required final axial length of the piston 10. This excess length may, for example, be 1 mm. The edge region 13 between the recess 11 and a radially outer peripheral portion 14 of the piston crown 12 is then alloyed or dispersion hardened using a laser beam as described in more detail below, to improve the properties of the edge region 13. The use of the laser causes the edge region to deform and the excess length of the piston 10 before laser treatment is calculated to accommodate this collapse. The piston 10 is then finish machined.

Referring next to Figure 2, in the second method, a piston 20 of the aforementioned kind is machined without the formation of a recess in the crown 22. The axial length of the piston is not substantially greater than the required final axial length of the piston 20. The portion of the crown which is to form an edge region between the recess, when machined, and a radially outer peripheral portion 24 of the crown 22 is then alloyed or dispersion hardened using a laser beam as described in more detail below to improve the properties of the portion which is to be the edge region. The piston 20 is then finish machined to form a hemispherical recess 21 with the grain refined edge region 23 between the recess 21 and the peripheral portion 24.

Referring next to Figure 3, in the third method, a piston 30 of the aforementioned kind is machined so that it has a re-entrant recess 31 in the crown 32. The edge region 33 between the recess 31 and a radially outer peripheral portion 34 overhangs the recess 31 and is formed to project axially forwardly of its required final position. The edge region 33 is then alloyed or dispersion hardened using a laser beam as described in more detail below to improve the properties of the edge region 33. The beam is not directed at the very edge of the region 33 but slightly inwardly of the edge to improve heat conduction away from the region. The use of the laser causes the overhanging edge region 33 to deform and the forward projection of the edge region 33 before laser treatment is calculated to accommodate this deformation so that after laser treatment the edge region is at its required final position. The piston is then finish machined.

Referring next to Figure 4, in the fourth method, a piston 40 of the aforementioned type is machined without the formation of a recess in the crown 42. The axial length of the piston is not substantially greater than the required final axial length of the piston. The portion of the crown which is to form an edge region between the recess, when machined, and a radially outer peripheral portion 44 of the crown 42 is then alloyed or grain refined using a laser beam as described in more detail below to improve the properties of the portion which is to be the edge region. The piston 40 is then finish machined to form a re-entrant recess 41 with an alloyed or dispersion hardened edge region 43 between the recess 41 and the peripheral portion 44.

The ways in which the laser treatment can be effected are as follows. Inall cases a continuous wave carbon dioxide laser having an output of 5 Kw may be used, although useful results may be achieved at a rating of 1 Kw. Before the laser treatment, the surface to be treated may be coated with a substance which increases the absorption of the laser beam by the surface. Some suitable substances are chromic materials or zinc phosphate or matt black paint or colloidal graphite.

In laser alloying, an alloying material, for example manganese, is applied to the region or piston part in the form of a powder, or a slurry or a wire. In dispersion hardening, a suitable dispersion hardening material, for example alumina, is similarly applied to the region or piston part.

The laser may be used in a number of ways, amongst which are the following.

In a first method (see Fig. 5A), the laser is defocussed and a beam of about 10 mm in width is directed parallel to the axis of the piston onto the edge region or the portion which is to be the edge region. The beam passes only once over the region. A second treatment (see Fig. 5B) is the same as the first treatment but with the beam focussed to give a narrower region of alloying or dispersion hardening.

A third treatment (see Fig. 5C) is the same as the first and second treatments but the beam makes a number of side-by-side passes around the region to increase the width of the region which is alloyed or dispersion hardened.

In a fourth treatment (Fig. 5D), the laser beam is focussed and rastered and directed parallel to the axis of the piston onto the edge region or the portion which is to become the edge region. This treatment gives greatest control over the treated region and the depth of alloying or grain refining and gives a substantially even energy profile across the region swept by the rastered beam.

In all these methods, the molten material and piston material mix together to form, in the case of an alloying material, an alloy or, in the case of a dispersion hardening material, a dispersion of the material within the piston material. Since the piston provides an almost infinite heat sink for the molten materials they are rapidly quenched. The depth of the alloyed or dispersion hardened region or piston part is determined by the laser power and the time for which the laser is directed at the region or part.

Although the illustrated embodiments of the invention use a laser, it will be appreciated that an electron beam may also provide the necessary concentrated energy source.

**Claims**

1. A method of manufacturing a piston of an aluminium or an aluminium alloy material for a combustion engine or a reciprocating compressor and having a recessed crown or bowl in the crown and an edge region between the recess or bowl and a radially outer peripheral portion of the crown, characterised by the step of, either before or after the machining of the recess, laser or electron beam alloying or dispersion hardening the edge region, or the part of the piston which is to form the edge region.

2. A method according to claim 1 characterised by the use of a laser or electron beam alloying method comprising applying to the region, or the part, an alloying material which forms, with the material of the piston, an alloy which is better able to resist operating conditions in an engine cylinder than the material of the piston, and then heating the laser or electron beam the alloying material and the piston material beneath the alloying material to form an annular region of alloy extending around the edge region or around the part of the piston which is to form the edge region.

3. A method according to claim 2, characterised in that the alloying material is applied in the form of a powder or a slurry or a wire.

4. A method according to claim 2, characterised in that the alloying material is placed onto the piston either by electroplating or by electroless plating.

5. A method according to claim 1 characterised in that the treatment comprises laser or electron beam dispersion hardening.

6. A method according to claim 5, characterised by the step of applying to the area or areas a dispersion hardening material which forms, when dispersed in the material of the piston, a composite material which is better able to resist operating conditions in an engine cylinder than the material of the piston, and then heating by laser or electron beam the dispersion hardening material and the piston material beneath the dispersion hardening material to form an annular region of piston material with said dispersion hardening material dispersed therein.

7. A method according to any one of claims 1 to 6 characterised by the step of performing the machining step before the treating step, and by machining the piston to produce a recessed crown whose dimensions are sufficiently altered from the required dimensions of a treated piston as to allow for the change in the dimensions of the piston caused by the treating step.

8. A piston when made by the method of any one of claims 1 to 7.

## Revendications

1. Méthode de fabrication d'un piston en aluminium ou en alliage d'aluminium pour moteur à combustion interne ou compresseur à mouvement alternatif et présentant une tête évictee ou un creux en forme de bol dans la tête et une région de bordure située entre l'évidement ou le bol et une portion périphérique, radialement externe de la tête, caractérisée par la phase de, soit avant, soit après l'usinage de l'évidement, apporter à la région de bordure ou à la partie du piston qui doit former cette région de bordure un produit d'alliage ou lui faire subir un durcissement par dispersion.

2. Méthode selon la revendication 1, caractérisée par l'emploi d'une méthode d'apport de produit d'alliage par faisceau laser ou faisceau électronique, comprenant le fait d'apporter dans la région, ou dans la partie du piston, un matériau d'alliage qui forme avec le matériau du piston un alliage qui convient mieux pour résister aux conditions opératoires régnant dans un cylindre de moteur que le matériau du piston, puis le chauffage, au faisceau laser ou au faisceau électronique, du matériau d'alliage et du matériau du piston situé à côté du matériau d'alliage pour former une région annulaire d'alliage s'étendant autour de la région de bordure ou autour de la partie du piston qui doit former la région de bordure.

3. Méthode selon la revendication 2, caractérisée en ce que le matériau d'alliage est appliqué sous la forme de poudre, de coulis ou de fil.

4. Méthode selon la revendication 2, caractérisée en ce que le matériau d'alliage est placé sur le piston soit par électroplastie, soit par revêtement autre.

5. Méthode selon la revendication 1, caractérisée en ce que le traitement comporte un durcissement par dispersion au faisceau laser ou au faisceau électronique.

6. Méthode selon la revendication 5, caractérisée par la phase consistant à apporter sur la zone ou sur les zones un matériau de durcissement par dispersion qui forme, lorsqu'il est dispersé dans le matériau du piston, un matériau composite qui convient pour résister aux conditions opératoires régnant dans un cylindre de piston que le matériau du piston, puis à chauffer, par faisceau laser ou électronique, le matériau de durcissement par dispersion et le matériau du piston situé à côté du matériau de durcissement par dispersion pour former une région annulaire de matériau du piston avec le dit matériau de durcissement par dispersion dispersé dans le matériau du piston.

7. Méthode selon l'une quelconque des revendications 1 à 6, caractérisée par la phase consistant à exécuter la phase d'usinage avant la phase de traitement et par l'usinage du piston pour donner une tête évidée dont les dimensions sont suffisamment modifiées par rapport aux dimensions désirées d'un piston traité pour prévoir le changement des dimensions du piston causé par la phase de traitement.

8. Piston lorsqu'il est fabriqué par la méthode indiquée dans l'une quelconque des revendications 1 à 7.

## Patentansprüche

1. Verfahren zum Herstellen eines Kolbens aus einem Aluminium- oder Aluminiumlegierungs-Material für eine Brennkraftmaschine oder einen Kolbenverdichter, mit einem Boden, der mit einer Aushöhlung oder einer Wanne versehen ist und einen Randbereich zwischen der Aushöhlung oder Wanne und einen radialen äußeren Umfangsbereich des Bodens aufweist, gekennzeichnet durch den Schritt, daß entweder vor oder nach dem spanabhebenden Bearbeiten der Aushöhlung der Randbereich oder der Teil des Kolbens, der den Randbereich bilden soll, einer Laser- oder Elektronen-Strahllegierung oder einer Dispersionshärtung unterzogen wird.

2. Verfahren nach Anspruch 1, gekennzeichnet durch die Verwendung eines Laser- oder Elektronen-Strahlhärtungsverfahrens, enthaltend: Zuführen eines Legierungsmaterials zu dem Randbereich oder dem diesen ausbildenden Bereich, das mit dem Kolbenmaterial eine Legierung bildet, die besser in der Lage ist, den Betriebsbedingungen in einem Maschinenzylinder zu widerstehen, als das Kolbenmaterial, und anschließendes Aufheizen des Legierungsmaterials und des Kolbenmaterials unterhalb dem Legierungsmaterial mittels des Laser- oder Elektronenstrahles, um einen ringförmigen Legierungsbereich auszubilden, der sich um den Randbereich oder um jenen Bereich des Kolbens erstreckt, der den Randbereich bilden soll.

3. Verfahren nach Anspruch 2, dadurch gekennzeichnet, daß das Legierungsmaterial in Form eines Pulvers oder eines Breis oder eines Drahtes aufgebracht wird.

4. Verfahren nach Anspruch 2, dadurch gekennzeichnet, daß das Legierungsmaterial auf den Kolben entweder durch Galvanisieren oder durch stromlose Abscheidung aufgebracht wird.

5. Verfahren nach Anspruch 1, dadurch gekennzeichnet, daß die Behandlung Laser- oder Elektronenstrahl-Dispersionshärtung umfaßt.

6. Verfahren nach Anspruch 5, gekennzeichnet durch den Schritt des Anbringens eines Dispersionshärtungsmaterials auf den Bereich oder die Bereiche, das, wenn es in dem Kolbenmaterial dispergiert, ein Mischmaterial bildet, das besser in der Lage ist, den Betriebsbedingungen in einem Maschinenzylinder zu widerstehen, als das Kolbenmaterial, und anschließendes Härten des Dispersionshärtungsmaterials und des Kolbenmaterials unterhalb des Dispersionshärtungsmaterials mit einem Laser- oder Elektronenstrahl, um einen ringförmigen Bereich von Kolbenmaterial zu bilden, in dem das Dispersionshärtungsmaterial dispergiert ist.

7. Verfahren nach einem der Ansprüche 1 bis 6, gekennzeichnet durch den Schritt der Ausführung der spanabhebenden Bearbeitung vor dem Behandlungsschritt und durch spanabhebendes Bearbeiten des Kolbens zur Herstellung eines ausgehöhlten Kolbens, dessen Abmessungen von den benötigten Abmessungen eines behandelten Kolbens ausreichend abweichen, um die Abmessungsänderungen des Kolbens zuzulassen, die von dem Behandlungsschritt hervorgerufen werden.

8. Kolben, hergestellt nach dem Verfahren nach einem der Ansprüche 1 bis 7.

0 077 349

Fig.1.

Fig.2.

Fig.3.

Fig. 4.

Fig.5A.

Fig.5B.

Fig.5C.

Fig.5D.

1